# EUROPEAN PATENT SPECIFICATION

(11) **EP 1 674 710 B1**
(45) Date of publication and mention of the grant of the patent: **02.01.2013**
(21) Application number: 04106790.1
(22) Date of filing: 21.12.2004
(51) Int. Cl.: F02M 25/07, F02B 37/013

(54) **Method for recirculating exhaust gases in a turbocharged engine and the relative turbocharged engine**
Verfahren zur Abgasrückführung an einer mittels Abgasturbolader aufgeladenen Brennkraftmaschine
Méthode pour la recirculation des gaz d'échappement d'un moteur à pistons à turbocompresseur

(30) Priority: 22.12.2003 IT MI20032559
(43) Date of publication of application: 28.06.2006
(73) Proprietor: FPT Industrial S.p.A., 10156 Torino (IT)
(72) Inventor: Fessler, Harald, 9320 Arbon (CH); Dellora, Giancarlo, 10129 Torino (IT)
(74) Representative: Gervasi, Gemma

(56) References cited:
- WO-A-2004/044412
- DE-A1- 10 319 594
- US-B1- 6 378 308
- PATENT ABSTRACTS OF JAPAN vol. 2000, no. 11, 3 January 2001 (2001-01-03) & JP 2000 220480 A (OSAKA GAS CO LTD), 8 August 2000 (2000-08-08)
- PATENT ABSTRACTS OF JAPAN vol. 2000, no. 11, 3 January 2001 (2001-01-03) & JP 2000 213384 A (OSAKA GAS CO LTD), 2 August 2000 (2000-08-02)

## Description

### FIELD OF THE INVENTION

The present invention relates to a method for recirculating exhaust gases in a turbocharged engine, in particular in a two-stage turbocharged engine and, more particularly, in a diesel engine.

### STATE OF THE ART

Exhaust gas recirculation, or EGR, is common practice in the field of internal combustion engines. According to this system a portion of the exhaust gases from the engine are recirculated upstream of the engine and then reintroduced into the combustion chambers with the intake air. This permits to lower the combustion flame temperature and leads to a reduced formation of nitrogen oxides, one of the main pollutants in internal combustion engine emissions.

According to a conventional method for recirculating exhaust gases in turbocharged engines a portion of the exhaust gases from the engine is withdrawn, upstream of the turbine/turbines that drives/drive the turbocharger compressor/compressors, and then reintroduced immediately upstream of the combustion chambers, downstream of the turbocharger compressor; according to other solutions the exhaust gases are withdrawn when leaving the turbocharger turbine and before entering the vehicle's muffler system and introduced into the air intake line upstream of the turbocharger compressor. A problem related to these systems is that the pressure in the area in which the exhaust gases to be recirculated are withdrawn is not, or is not always, lower than the pressure at the point where the exhaust gases are fed into the air intake line. As a result the flow rate of the recirculated gases is not always sufficient to achieve the required emission levels. A number of solutions have been developed to overcome this drawback, *for example the apparatus disclosed in patent document* US 6301887 B1*.*

In the case of an EGR circuit on the high pressure side, when the intake pressure is not continuously higher than the exhaust pressure (pressure waves), check valves may be used. This is not an effective means of controlling recirculated gas flow rates or of obtaining an uniform distribution of the recirculated gases into the intake air, therefore venturi tubes are sometimes used to create, within a limited range of engine rpm and flow rates, the appropriate pressure in order to achieve the required exhaust gas flow rates. Variable geometry venturis, suitable for use in a wider range of engine speeds and gas flows, are also used. In the event of recirculation on the low pressure side, these devices are used in conjunction with valves that partially obstruct the cross-sectional area of the exhaust line in order to create back pressure and guarantee the passage of an adequate exhaust gas flow through the recirculation system.

These problems are particularly serious in view of the fact that high exhaust gas recirculation rates are usually required (for example, in diesel engines the exhaust gas recirculation rate may be as high as 50% of all exhaust gases). Another solution foresees providing a specific compressor, which may be operated electrically, on the recirculation line. All these systems increase the complexity of the engine and result in dissipation of energy due to additional resistance or obstructions in the intake/exhaust systems, and also to the fact that they absorb a certain amount of power (compressor) and thus lead to a reduction in overall engine efficiency and an increase in fuel consumption.

Several schemes are given in W02004044412. The figure 6 and 7 show schemes, whome features are disclosed in the preamble of the claim 1.

Other solutions are known from JP 2 000 220 480 A.)

### SUMMARY OF THE INVENTION

The problems described above have now been solved with a method for recirculating exhaust gases in a engine apparatus according to claim 1.

The invention also relates to a engine apparatus comprising an internal combustion engine, preferably a diesel engine, according to claim 5.

According to a preferred embodiment of this invention, the engine apparatus also comprises a control valve mounted on such recirculation line.

It is a particular object of the invention what is claimed in the appended claims.

### DESCRIPTION OF THE FIGURES

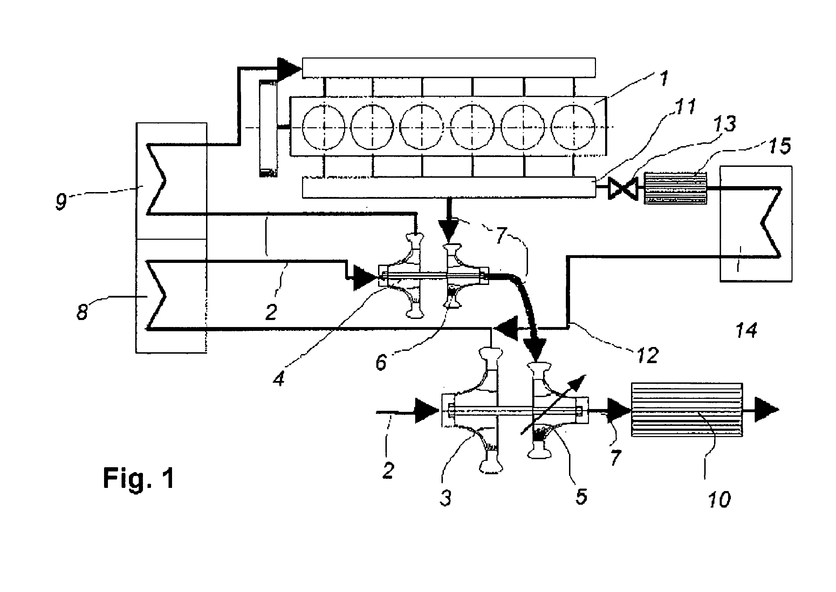

The invention will now be illustrated through a detailed description of preferred but not exclusive embodiments, furnished merely by way of example, with the aid of figure 1 attached hereto which illustrates the layout of a engine apparatus according to the invention.

### DETAILED DESCRIPTION

With reference to figure 1, the layout of a engine apparatus according to this invention is shown; the engine apparatus comprises an internal combustion engine 1, preferably a diesel engine, an air intake line 2 to the engine, that takes air from the outside, a first 3 and a second 4 compressor, placed in series on the intake line which perform a two-stage compression of the intake air and are driven by a first 5 and a second 6 turbine placed on the engine exhaust gas line 7 and driven by the exhaust gases, as in conventional two-stage turbocharged engines. The engine apparatus includes the intake air coolers, one (intercooler) 8 mounted after the first compressor and the other (aftercooler) 9 after the second. A particulate trap 10 is advantageously mounted on the exhaust gas outlet.

According to this invention, a portion of the exhaust gases are withdrawn after leaving the engine, for example from the exhaust gas manifold 11, and, in any case, upstream of both the turbines 5 and 6, and then reintroduced into the intake line 7 at a point between the two compressors, upstream of the intercooler to facilitate the lowering of the temperature of the gas supplied to the compressor 4. For that purpose there is a specific recirculation line 12 connecting the withdrawal and introduction points. Said line is preferably equipped with a control valve 13; the method according to this invention may comprise the use of said valve to regulate the recirculation flow rate; such regulation may be achieved using methods already known in the field of exhaust gas recirculation.

According to the present invention, the recirculated gases pass through a particulate trap 15, before entering the intake line, upstream of the intercooler 8. If the particulate in the recirculating gases is not removed it can settle in the intercooler or in the aftercooler. The trap 15 is preferably of a type that is capable of withstanding high exhaust gas temperatures; metal traps may be suitable for recirculated gases.

Given the use of high recirculation rates, in order to make sure that the gas is supplied to the compressor 4 at the right temperature, it is cooled before being fed into the intake line 2, by means of a cooler 14 on the recirculation line, preferably downstream of the trap 15.

The method and engine according to this invention make exhaust gas recirculation possible without the need for any specific compressors or complex systems to induce pressure differences, which are sources of energy dissipation. They permit to control the flow rate properly by means of an appropriate valve, thanks to the pressure difference between the withdrawal and the reintroduction point, a natural consequence of the double expansion of the exhaust gases in the turbines. This method also eliminates the need to fully recompress the recirculating gas flow even if a particulate trap, a cooler and a gas flow rate control valve are provided on the recirculation line.

## Claims

1. Method for recirculating exhaust gases in a engine apparatus comprising an internal combustion engine (1), preferably a diesel engine,
a first (3) and a second (4) turbocharger compressor placed in series on an air intake line (2) to said engine (1),
one intercooler (8) mounted between the first (3) compressor and the second (4) compressor with reference to the intake air steam,
the method comprising withdrawal of a portion (also referred to as "recirculated gases") of the exhaust gases from the engine after living the engine, upstream of the turbines (5 and 6) and the introduction of said portion into said intake line (2) between the outlet of the first compressor and the intake of the second one;
the method being **characterized by** the fact that it comprises the passage of such portion of exhaust gases through a particulate trap (15) and the cooling of such gas before being introduced into the intake line (2) upstream of the intercooler (8).

2. Method according to claim 1, **characterized by** the fact that it comprises regulation of the flow of said portion of exhaust gases by means of a control valve (13).

3. Method according to any of the previous claims, **characterized by** the fact that said plant comprises an exhaust gas line (7) from said engine, a first (5) and a second turbine (6) for driving said first (3) and second compressor (4) respectively, wherein said portion of the exhaust gases are withdrawn from the exhaust line upstream of said turbines.

4. Method according to any of the previous claims **characterized by** the fact that said engine is a diesel engine.

5. Engine apparatus comprising an internal combustion engine (1), an air intake line (2) to said engine, a first (3) and a second (4) turbocharger compressor placed in series on said intake line, an exhaust gas line (7) from said engine, a first (5) and a second (6) turbine for driving said first (3) and second compressor (4) respectively, placed in series on said exhaust line, one intercooler (8) mounted between the first (3) compressor and the second (4) compressor with reference to the intake air steam, an exhaust gas recirculation line (12) that connects a first point on the exhaust line after living the engine, between the engine and said turbines (5, 6), with an introduction point on the intake line (2) between said first and second compressor (3, 4) **characterized by** the fact that it comprises a particulate trap (15) and a cooler (14) placed on such recirculation line (12) and by the fact that said introduction point is upstream of the intercooler (8).

6. Engine apparatus according to claim 5, **characterized by** the fact that the engine is a diesel engine.

7. Engine apparatus according to claim 5 or 6, **characterized by** the fact that it comprises a control valve (13) placed on such recirculation line.

## Patentansprüche

1. Verfahren zum Rückführen von Abgasen in einer Motorvorrichtung, die umfasst:
einen Verbrennungsmotor (1), bevorzugt einen Dieselmotor,
einen ersten (3) und einen zweiten (4) Turboladerkompressor, die in Reihe an einer Luftansaugleitung (2) zu dem Motor (1) angeordnet sind,
einen Zwischenkühler (8), der zwischen dem ersten (3) Kompressor und dem zweiten (4) Kompressor in Bezug auf den Ansaugluftstrom montiert ist,
wobei das Verfahren einen Abzug eines Anteils (auch als "rückgeführte Gase" bezeichnet) der Abgase von dem Motor nach Verlassen des Motors stromaufwärts der Turbinen (5 und 6) und die Einführung des Anteils in die Ansaugleitung (2) zwischen dem Auslass des ersten Kompressors und der Ansaugung des zweiten umfasst;
wobei das Verfahren durch die Tatsache gekennzeichnet ist, dass es den Durchgang dieses Anteils von Abgasen durch einen Partikelfänger (15) und das Kühlen dieses Gases vor Einführen in die Ansaugleitung (2) stromaufwärts des Zwischenkühlers (8) umfasst.

2. Verfahren nach Anspruch 1,
**gekennzeichnet durch**
die Tatsache, dass es die Regulierung der Strömung des Anteils der Abgase mittels eines Steuerventils (13) umfasst.

3. Verfahren nach einem der vorhergehenden Ansprüche,
**gekennzeichnet durch**
die Tatsache, dass die Anlage eine Abgasleitung (7) von dem Motor, eine erste (5) und eine zweite Turbine (6) zum Antrieb des ersten (3) bzw. zweiten Kompressors (4) umfasst, wobei der Anteil der Abgase von der Abgasleitung stromaufwärts der Turbinen abgezogen wird.

4. Verfahren nach einem der vorhergehenden Ansprüche,
**gekennzeichnet durch**
die Tatsache, dass der Motor ein Dieselmotor ist.

5. Motorvorrichtung, mit einem Verbrennungsmotor (1), einer Luftansaugleitung (2) zu dem Motor, einem ersten (3) und einem zweiten (4) Turboladerkompressor, die in Reihe an der Ansaugleitung angeordnet sind, einer Abgasleitung (7) von dem Motor, einer ersten (5) und einer zweiten (6) Turbine zum Antrieb des ersten (3) bzw. zweiten Kompressors (4), die in Reihe an der Abgasleitung angeordnet sind, einem Zwischenkühler (8), der zwischen dem ersten (3) Kompressor und dem zweiten (4) Kompressor in Bezug auf den Ansaugluftstrom montiert ist, einer Abgasrückführungsleitung (12), die einen ersten Punkt an der Abgasleitung nach Verlassen des Motors zwischen dem Motor und den Turbinen (5, 6) mit einem Einführungspunkt an der Ansaugleitung (2) zwischen dem ersten und zweiten Kompressor (3, 4) verbindet,
**gekennzeichnet durch**
die Tatsache, dass sie einen Partikelfänger (15) und einen Kühler (14) umfasst, die an der Rückführleitung (12) angeordnet sind, und **durch** die Tatsache, dass der Einführungspunkt sich stromaufwärts des Zwischenkühlers (8) befindet.

6. Motorvorrichtung nach Anspruch 5,
**gekennzeichnet durch**
die Tatsache, dass der Motor ein Dieselmotor ist.

7. Motorvorrichtung nach einem der Ansprüche 5 oder 6,
**gekennzeichnet durch**
die Tatsache, dass sie ein Steuerventil (13) umfasst, das an der Rückführleitung angeordnet ist.

## Revendications

1. Procédé de recirculation des gaz d'échappement dans un appareil à moteur comprenant un moteur à combustion interne (1), de préférence un moteur diesel,
un premier (3) et un second (4) turbocompresseur placés en série sur une conduite d'admission d'air (2) audit moteur (1),
un refroidisseur intermédiaire (8) monté entre le premier (3) compresseur et le second (4) compresseur en référence au courant d'air d'admission,
le procédé comprenant l'étape consistant à retirer une partie (également désignée sous le terme de « gaz recirculés ») des gaz d'échappement du moteur après avoir quitté le moteur, en amont des turbines (5 et 6) et l'étape consistant à introduire ladite partie dans ladite conduite d'admission (2) entre la sortie du premier compresseur et l'admission du second ;
le procédé étant **caractérisé en ce qu'**il comprend le passage d'une telle partie de gaz d'échappement par un piège à particules (15) et le refroidissement de tels gaz avant d'être introduits dans la conduite d'admission (2) en amont du refroidisseur intermédiaire (8).

2. Procédé selon la revendication 1, **caractérisé en ce qu'**il comprend la régulation de l'écoulement de ladite partie de gaz d'échappement au moyen d'une soupape de régulation (13).

3. Procédé selon l'une quelconque des revendications précédentes, **caractérisé en ce que** ladite installation comprend une conduite de gaz d'échappement (7) dudit moteur, une première (5) et une seconde turbine (6) pour entraîner ledit premier (3) et ledit second compresseur (4) respectivement, dans lequel ladite partie des gaz d'échappement est retirée de la conduite d'échappement en amont desdites turbines.

4. Procédé selon l'une quelconque des revendications précédentes, **caractérisé en ce que** ledit moteur est un moteur diesel.

5. Appareil de moteur comprenant un moteur à combustion interne (1), une conduite d'admission d'air (2) jusqu'audit moteur, un premier (3) et un second (4) turbocompresseur placés en séries sur ladite conduite d'admission, une conduite de gaz d'échappement (7) dudit moteur, une première (5) et une seconde (6) turbine pour entraîner ledit premier (3) et ledit second compresseur (4) respectivement, placés en séries sur ladite conduite d'échappement, un refroidisseur intermédiaire (8) monté entre ledit premier compresseur (3) et le second compresseur (4) en référence au courant d'air d'admission, une conduite de recirculation de gaz d'échappement (12) qui raccorde un premier point sur la conduite d'échappement après avoir quitté le moteur, entre le moteur et lesdites turbines (5, 6), avec un point d'introduction sur la conduite d'admission (2) entre lesdits premier et second compresseurs (3, 4), **caractérisé en ce qu'**il comprend un piège à particules (15) et un refroidisseur (14) placés sur ladite conduite de recirculation (12) et **en ce que** ledit point d'introduction est en amont du refroidisseur intermédiaire (8).

6. Appareil de moteur selon la revendication 5, **caractérisé en ce que** le moteur est un moteur diesel.

7. Appareil de moteur selon la revendication 5 ou 6, **caractérisé en ce qu'**il comprend une soupape de régulation (13) placée sur ladite conduite de recirculation.
